# EUROPEAN PATENT SPECIFICATION

(11) **EP 0 437 513 B1**
(45) Date of publication and mention of the grant of the patent: **28.02.1996**
(21) Application number: 89911728.7
(22) Date of filing: 04.10.1989
(51) Int. Cl.: G11B 23/44

(54) **FRAME-BY-FRAME DATA RECORDING FILM INFORMATION EXCHANGE SYSTEM USING DEDICATED MAGNETIC TRACKS ON FILM**
DATENAUFZEICHNUNGSSYSTEM FÜR BILDAUSSCHNITTSWEISEN FILMINFORMATIONSAUSTAUSCH MIT ZUGEORDNETEN MAGNETSPUREN AM FILM
SYSTEME D'ECHANGE D'INFORMATION DE FILM A ENREGISTREMENT DE DONNEES IMAGE-PAR-IMAGE UTILISANT DES PISTES MAGNETIQUES SPECIALISEES SUR LE FILM

(30) Priority: 07.10.1988 US 255798
(43) Date of publication of application: 24.07.1991
(73) Proprietor: EASTMAN KODAK COMPANY, Rochester, New York 14650-2201 (US)
(72) Inventor: CLOUTIER, Robert, Paul, Spencerport, NY 14559 (US); ATKINSON, William, Clark, Webster, NY 14580 (US); WASH, Michael, Lee, Pittsford, NY 14534 (US); WHITFIELD, Arthur Allan, Rochester, NY 14612 (US)
(74) Representative: Blickle, K. Werner, Dipl.-Ing.
(86) International application number: US8904368
(87) International publication number: WO9004254

(56) References cited:
- EP-A- 0 011 086
- FR-A- 2 295 453
- US-A- 3 379 095
- US-A- 3 782 947
- US-A- 4 054 920
- US-A- 4 251 156
- US-A- 4 441 807
- US-A- 4 443 099

## Description

### BACKGROUND OF THE INVENTION

### Limitations of Current Consumer Photography Technology

Communication between the camera user and the dealer or photofinisher typically requires written forms which are filled out by the user, usually well after a given scene has been photographed. Thus, in addition to the inconvenience of filling out such a form, scene-related information is typically lost or forgotten. Such information may include the user's desire to not have a particular frame printed or to have several prints made from a given frame, for example. Such information may also include the photographic parameters of the scene, observed by the user or by a sensor, which would have aided the photofinisher's classification of the scene to increase the quality of the prints made from the film.

Several factors reduce the efficiency of the overall photofinishing process. For example, in a large photofinishing laboratory not operating on a 24 hour per day basis, the film processing equipment must lie dormant for a period of time at the beginning of each work day until enough incoming customer film has been sorted to form one batch of a minimum number (e.g. 70) of film strips of the same type (such as color negative 35 mm film) to justify running the printing equipment. Of course, undeveloped film (regular customer orders) must be separated from developed film (print re-orders).

More significant sources of inefficiency in the photofinishing process include the mechanical steps required to maintain proper correspondence between each film strip and the prints made from it, as well as the customer's identity. These mechanical steps include the sorting and handling of each form or envelope originally filled out by the customer so that the envelope follows the customer's film strip throughout the photofinishing process and winds up with the corresponding set of prints.

One of the most significant sources of inefficiency in the photofinishing process arises from the necessity of re-printing an image from a particular frame on a customer's film strip whenever inspection reveals that the corresponding original print was incorrectly made (usually by an incorrect exposure of the photosensitive print paper to the developed film negative image). In order to replace the original print with a better (so-called "makeover") print, the exposure conditions ("classification") used to make the original print from the negative film image must first be corrected. The particular film negative frame in question must be re-classified and then re-printed while preserving the original prints of the other frames. The mechanical steps involved here include notching the prints to indicate the boundaries between adjacent prints on a roll of prints and the boundaries between adjacent orders on the roll, as well as marking any original print requiring a makeover in a labor intensive procedure which insures that proper correspondence between each film strip and the corresponding original prints, makeover prints and customer order form (envelope) is never lost.

### Problems to be Solved by the Invention

Recording of information on the film has been loosely suggested as one possible way around some of the limitations described above. These suggestions have ranged from optical recording of eye-readable symbols or machine readable symbols to the magnetic recording of machine readable data. Of course, optical recording on the film has only limited use, because once the film has been developed, no further recording may be done. Furthermore, the information must be restricted to those limited areas on the film not occupied by the camera-exposed image of each frame, a significant limitation on the amount of information that can be recorded.

EP-A-0 011 086 discloses the use of an opaque magnetic recording material which is physically associated with the core of a film disk and serves to carry information applied at various stages throughout the life of the film unit.

With magnetic recording in a virtually transparent magnetic layer, high density recording may be done everywhere on the film including in the image area, so that all relevant information theoretically could be recorded with each frame on the film. However, what has not been recognized in the prior art is that complete exploitation of the potential capabilities of magnetic recording on film results in an unwieldy mass of data being recorded on the film, various bits of which must be separately accessed at various stages of the film use by camera and photofinisher. In such a scenario, the photofinisher in particular must find a certain needle of data in a massive haystack of data at a given step in the photofinishing process. For example, the classifier may require access to camera-recorded data specifying camera orientation for each frame, while the finishing station may require access to data recorded during print inspection specifying for each frame whether a makeover print was to be made. Therefore, one problem is how to record all of the required data in each frame on the film while permitting any stage of the photofinisher process to instantly access a particular piece of data in a given frame or to instantly access an area unoccupied by other data for recording of additional data.

Another problem arises if the accommodation of magnetic reading/writing on the film by both the camera and the various dealer and photofinishing stages precludes the photofinisher from reading/ writing on film formats (e.g. 110 or 126 film) adapted to ordinary cameras not having magnetic read/write capability. The problem here is how to permit the photofinisher to use magnetic recording on film without regard to the format of the film or the type of camera used, using the same magnetic recording format and hardware for all cases. Solving this last problem would permit all film for all cameras to include the additional magnetic layer, for photofinishing with the same magnetic read/write format and automated protocols using the film magnetic layer as a frame-by-frame scratch pad memory.

### SUMMARY OF THE INVENTION

According to the present invention an apparatus and method for reading or writing is provided as defined in Claims 1 and 8; their preambles reflect the US-A-3,379,095.

Essentially, magnetic reading and writing of information in a virtually transparent magnetic layer in the film during each stage of film use and film processing is restricted to certain dedicated parallel tracks extending longitudinally along the length of the film, the choice of track being determined in accordance with the particular information being recorded. Each track begins and ends essentially within a single frame, and is divided into a plurality of fields. The data in each field is identified by an ID code preceeded by and ID sentinel at the beginning of the field, and the beginning and end of each track is labeled with start and stop symbols respectively. Each sentinel consists of a character reserved from a universal dictionary of allowed characters, while each ID code is specified in a universal dictionary of ID codes encompassing all recordable film-related parameters or information types. Magnetic reading/writing is performed with transport of the film by the camera during field use and during transport of the film by the dealer or photofinisher during film processing, printing, etc.

The tracks are dedicated by universal pre-arrangement to certain sets of parameters or information, each set being of particular interest to a certain stage in the use of the film, the various stages including the camera, the dealer order entry station, the photofinisher order entry station, the classifier, the printer, the inspection or re-classifier station and the enveloper-sorter station.

The photofinisher tracks occupy the principal image area of each frame, so as to maximize the number of tracks available to the photofinisher and to render the format of these tracks virtually immune to any differences between various film formats or film perforation patterns. The photofinisher tracks therefore have a universally applicable format and are useful for additional purposes, such as the recording of frame-by-frame instructions for a film-to-video player or electronic print processing.

The camera tracks are present only in film adapted for use in cameras having magnetic read/write capability. For this purpose, the camera tracks are accommodated along the film edges, without impacting the photofinisher track locations, by interruption of the usual film perforation pattern along the film edges. In the preferred embodiment, each perforation is located next to the image area--one perforation per frame, while the camera tracks are located within each frame along the film edges between successive perforations. This feature accommodates camera tracks without reducing the number of recording tracks on the film for all other uses, while at the same time permitting the photofinisher tracks to have the same format and configuration for all types of film.

In a preferred embodiment of the invention, the various types of information are allocated among the dedicated tracks in accordance with groups of related information types or parameters, some individual groups being used by more than one stage of the film use cycle. Furthermore, in this preferred embodiment, information common to all frames of the film is in dedicated tracks on the film leader. Specifically, general information such as film type, camera type, owner identification, a directory of written information and the like are recorded in a first camera track (near one film edge) on the film leader. This first camera track is designated track C0 while the film leader is designated frame 0. Scene related parameters automatically sensed by the camera (such as scene luminence, camera orientation, color temperature, flash fire, etc.) are recorded in track C0 in each subsequent frame (e.g. frames 1-25). A second camera track, track C1, is dedicated to the recording of secondary information, such as shutter speed, aperture size, etc. Clearly, an intelligent photofinishing classifier station, in attempting to compute the optimum exposure conditions to make a print, would read the data on track C0 in each of frames 1 through 25 (for example), while a photofinisher finishing station, in attempting to maintain correspondence between a customer's film and his order form or envelope, would read the data on track C0 in frame 0. A similar sort of allocation of photofinisher dedicated tracks is employed, with customer print order request data being recorded in a first photofinisher track (F0) in frame 0, process data such as image classification and the number of prints made being recorded by frame in track F1, frames 1-24 (for example). The makeover correction, if any, is recorded in track F02. A summary of makeover data (e.g. total number of makeover prints) is recorded in track F2 in frame 0. Other photofinisher tracks may be dedicated to uses other than photofinishing, such as frame-by-frame user instructions for film-to-video players.

### Solution to the Problems

The invention solves the data access problem faced by (among others) the photofinisher of "finding a needle in a haystack" because each stage need merely know which track has been dedicated to the data relevant to that stage, and may read the data from that track while ignoring all other data magnetically recorded on the film. Furthermore, in some cases the reading of data can be dispensed with entirely in order to make certain basic determinations about the film, by simply determining whether certain tracks are empty or not. For example, whether a particular strip of film has already been developed (and therefore was submitted for print re-order) is readily determined by seeing whether or not certain tracks (e.g. track F1 of frames 1 - 24) contain recorded data or not.

The invention solves the problem of making the photofinisher track format and the photofinisher magnetic read/write system universally applicable to all film formats, while maximizing the number of non-camera tracks, by placing the camera tracks at the film edges between perforations on special film having one perforation per frame. This is important, since the amount of data which may be read or written by the photofinisher to enhance his process efficiency (and by later stages in film use such as a film-to-video player) is far greater than data recorded by the camera. Of even greater importance is the fact that making the photofinisher's magnetic recording format of universal application permits him to employ the techniques of the invention for all magnetically coated films, not just film used by a camera having magnetic recording capability, thus requiring no new customer purchases in order to universally exploit the invention with all film types.

### DESCRIPTION OF THE DRAWINGS

The invention may be understood by reference to the accompanying drawings, of which:
Fig. 1 is a diagram illustrating the parallel dedicated tracks in a virtually transparent magnetic layer on film having a special perforation format particularly adapted for use in cameras having a magnetic film read/write capability;
Fig. 2 is a simplified diagram illustrating the concept of a camera adapted to read or write data on the film of Fig. 1;
Fig. 3 is a diagram illustrating the parallel dedicated tracks in a virtually transparent magnetic layer on film having the currently ubiquitous perforation format used in ordinary cameras not having a magnetic film read/write capability;
Fig. 4 is a diagram illustrating the accommodation of film wander in the camera of Fig. 2 by the use of different head widths at the various stages of film use;
Fig. 5 is a block diagram illustrating the architecture of a read only memory containing a directory of track locations for various parameters which may be magnetically written or read on the film, in accordance with the dedicated track format of Fig. 1;
Fig. 6 is a diagram illustrating the preferred data format used in the dedicated tracks of Fig. 1 or Fig. 3;
Fig. 7 illustrates an exemplary data identification code table for universal use with the data format of Fig. 6 by all stages of film use including camera and photofinisher;
Fig. 8 illustrates an exemplary symbol table for universal use with the data format of Fig. 6 by all stages of film use including camera and photofinisher;
Fig. 9 illustrates an exemplary reserved control symbol table for universal use with the data format of Fig. 6 by all stages of film use including camera and photofinisher;
Fig. 10 is a block diagram illustrating a photofinishing system having magnetic read/write hardware including automated protocols which use the film of Figs. 1 or 3 as a scratch pad memory for increased efficiency or performance; and
Fig. 11 illustrates a typical operator's keyboard used in the photofinishing system of Fig. 10 to classify developed negatives for correct print exposures.

### DETAILED DESCRIPTION OF THE INVENTION

### Preferred Format of the Dedicated Tracks on Film

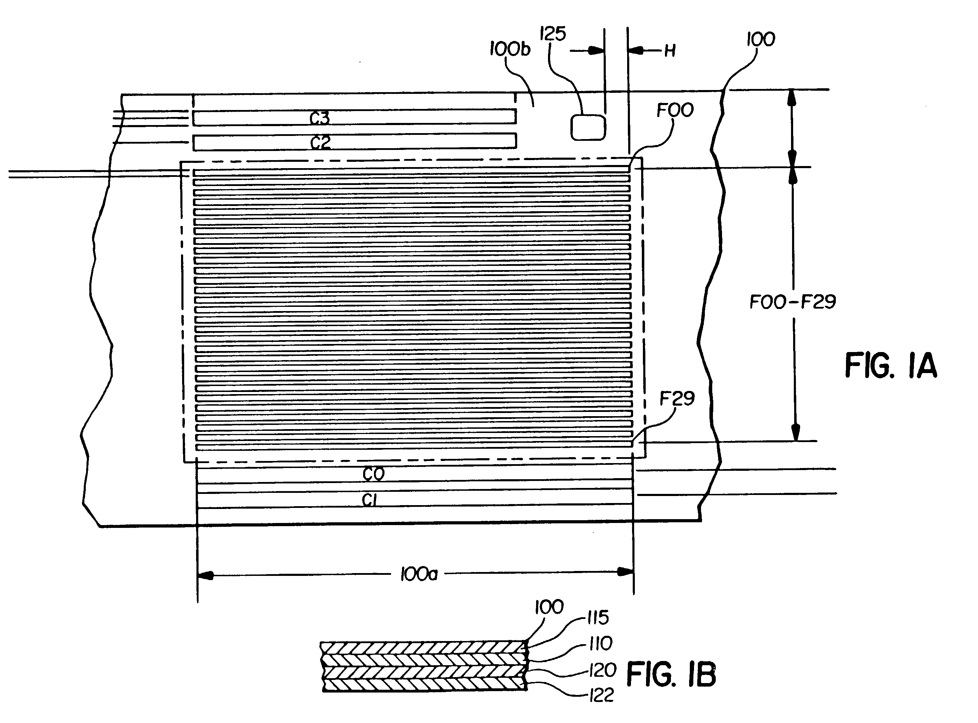

Referring to Fig. 1, a strip 100 of color negative film 35 millimeters wide includes a base 110, various well-known photo-chemical layers 115 on one side of the base 110 and a virtually transparent magnetic layer 120 on the other side. An anti-static and lubricating layer 122 covers the magnetic layer. The film strip 100 includes perforations 125 spaced along the film edge at regular intervals matching the pitch of a metering pawl in a camera adapted to use the film strip 100.

For purposes of recording data in the magnetic layer 120, each frame of the film strip 100 is divided into a plurality of predetermined parallel longitudinal track locations where magnetic tracks of data may be recorded. Each of the tracks is preferably labeled as shown in Fig. 1. In particular, the two outermost tracks along each edge of the film strip 100 are tracks C0, C1 and tracks C2, C3, respectively. The thirty innermost tracks are tracks F00 through F29. Each one of the outermost tracks C0 through C3 is dedicated to the recording of a particular type of information by a camera having magnetic recording capability, in accordance with a pre-arrangement universally established for all cameras and photofinishers. In a similar manner, each one of the innermost tracks is dedicated to the recording of a particular type of information by a particular type of photofinishing (or other) equipment, in accordance with the above-referenced universal pre-arrangement.

In order to accommodate the presence of the camera tracks C0 through C3 along the film strip edges, the perforations 125 are excluded from periodic imperforate edge regions 100a adjacent each exposed frame, and are restricted to intermediate regions 100b. In the embodiment of Fig. 1, there is only one perforation in each intermediate region 100b. In the preferred embodiment, perforations lie along only one edge of the film strip 100.

### Use of Dedicated Film Tracks in a Camera

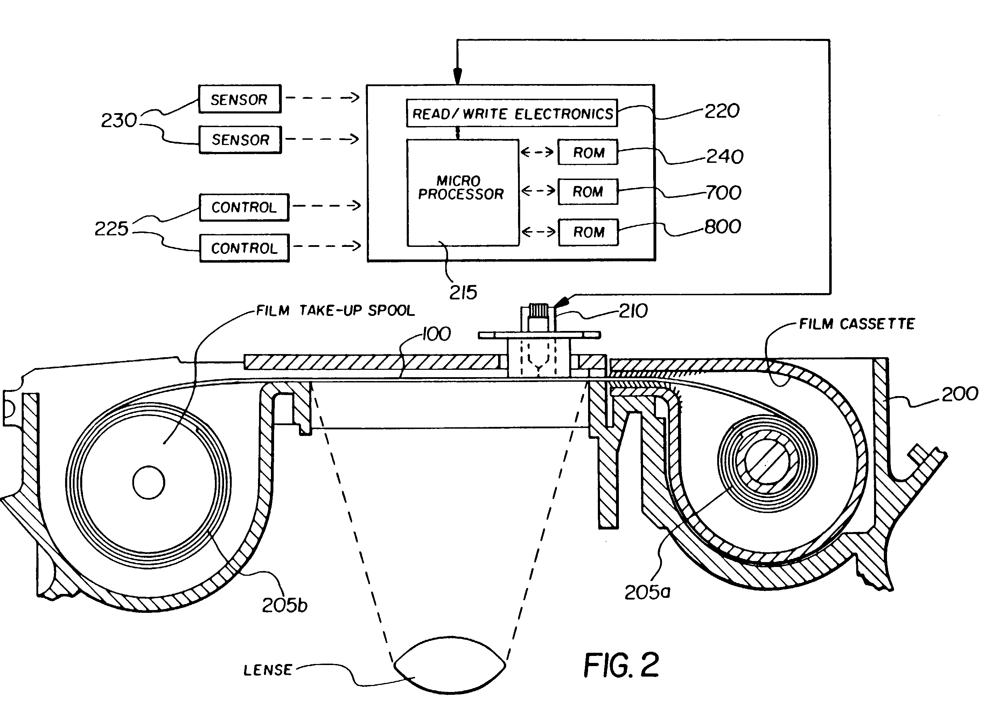

Referring to Fig. 2, a camera 200 transports the film strip 100 between the reels 205a,b, of a film cartridge and a take-up sprocket, respectively, conforming to the format of the perforations 125 of Fig. 1. The camera 200 includes a magnetic read/write head 210 in near proximity with the magnetic layer 120 on the unsensitized side of the film strip 100. A microprocessor 215 controls magnetic data recording or playback by the head 210 through head electronics 220.

The microprocessor 215 may accept order information to be magnetically recorded on the film strip 100 from the camera user through camera controls 225, such information pertaining to the number of prints desired for a given frame, by frame number, for example, or the name and address of the camera user for ultimate use by the photofinisher. The microprocessor 215 may also accept scene related information from scene sensors 230 to be magnetically recorded on the film strip 100 for ultimate use by the photofinisher. Such information may include camera orientation, scene luminence and the like.

The advantage of the longitudinal dedicated track format of Fig. 1 is that magnetic recording of data on the film strip 100 may be performed by the camera using a relatively stationary head (i.e. the head 210) by buffering all of the data to be recorded in a particular frame in a particular camera track and then transmitting the data to the head just as the film is being wound to the next frame.

The microprocessor 215 includes a read only memory 240 containing instructions sufficient to ensure that each type of information received is recorded in the correct one of the dedicated camera tracks C0 - C3 in accordance with a universal pre-arrangement common to both the camera and the photofinisher. For this purpose, the microprocessor sorts and buffers each piece of information in compliance with the instructions stored in the read only memory 240. The nature of this pre-arrangement and the architecture of the read only memory will be described below in this specification.

### Dedicated Tracks Format for Ordinary Cameras and Film

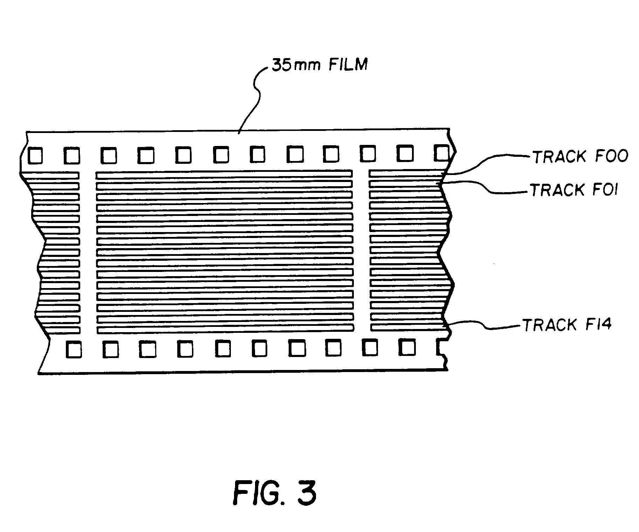

The format of the photofinisher tracks F00 through F29 is the same regardless of the placement of the film perforations 125 of Fig. 1. Thus, a photofinisher may employ the same magnetic recording protocols and hardware on all types of film provided that a virtually transparent magnetic layer (such as the layer 120 of Fig. 1) is included in all types of film. Thus, referring to Fig. 3, ordinary 35 mm color negative film having the now-standard pattern of closely spaced perforations along both film edges accommodates the photofinisher tracks F00 through F29 having the same width and spacing as that of the special film format of Fig. 1. Although the perforations of Fig. 3 preclude the presence of the camera tracks C0 through C3, such film is not used in cameras having magnetic read/write capabilities and so the camera tracks need not be present. The advantage here is that all subsequent users of the film (i.e. photofinisher, film-to-video player, etc.) have been allocated the maximum number of tracks for all film formats, including those of Fig. 1 and of Fig. 3.

### Camera and Photofinisher Dedicated Track Widths

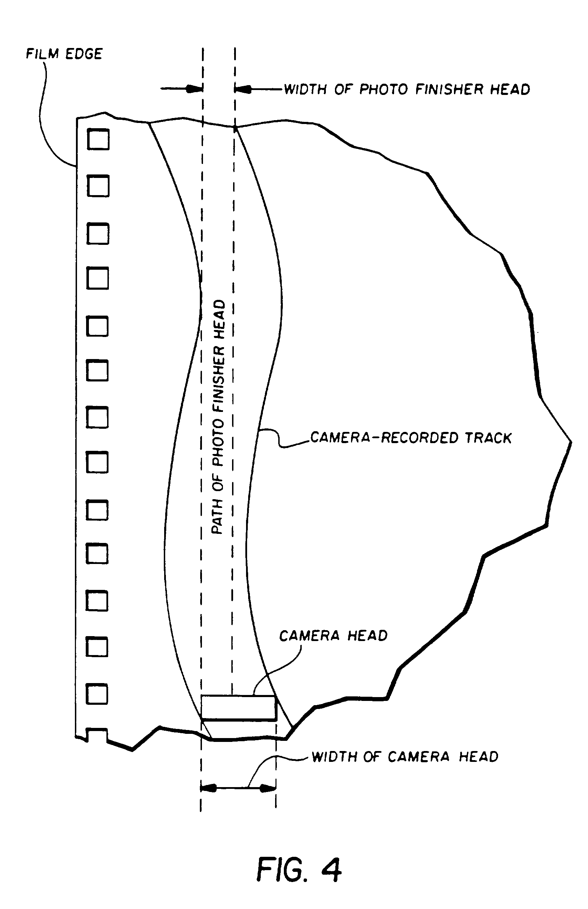

Referring to Fig. 4, the width of the camera dedicated tracks C0 - C3 is greater than that of the photofinisher tracks F00 - F29. Of course, these track widths are controlled by the selection of the camera head widths and the photofinisher head widths. Preferably, the difference is sufficient to accommodate film wander in the camera during winding of the film while recording is performed by the head 210. Such wandering causes the camera tracks to have the meandering appearance illustrated in Fig. 4. Note in Fig. 4 that the photofinisher head, which must read the camera tracks, does not leave the camera track because it has a much smaller width.

### Allocation of the Dedicated Tracks

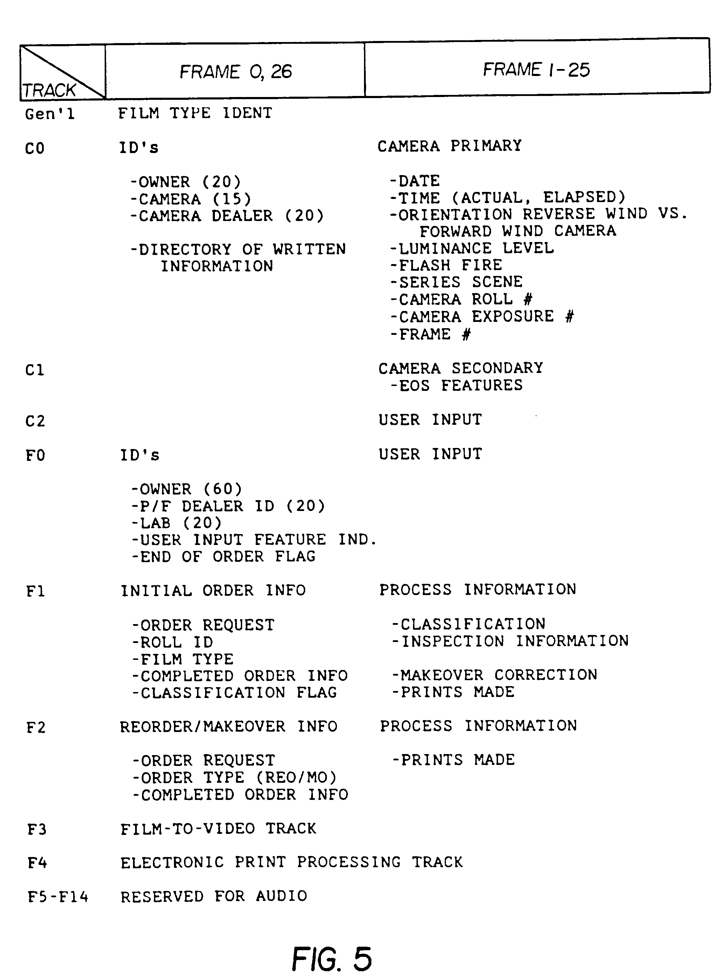

Fig. 5 illustrates the allocation of the dedicated tracks, among the various information types, implemented by microcodes stored in the read only memory 240 of Fig. 2. There are four camera tracks and fifteen photofinisher tracks in each frame of the film exposed by the camera, these frames being designated frames 1 through 25. The film leader and trailer are designated frames 0 and 26, respectively. In general, the information recorded in frames 0 and 26 pertains to the film strip 100 as a whole, while the information recorded in each of frames 1 through 25 is unique for a particular frame. In Fig. 5, three of the four camera tracks are used by the camera, while three of the thirty photofinisher tracks are used by the photofinisher. The rest of the photofinisher tracks are reserved for the recording of film-to-video player instructions (track F03), electronic print processing instructions (track F04) and audio (track F05 through F14). The remaining tracks (F15 - F29) are reserved for unforeseen purposes.

Each of the tracks is dedicated to a particular group of information types which would in most cases be written or read together. Thus, frame 0 track C0 is reserved for information relating to the owner and the camera for recording by the camera. Similarly, frame 0 track F00 is reserved for information relating to the owner and the photofinisher for recording by the photofinisher. Likewise, track F00 of frame 0 is reserved for recording by the photofinisher--or by an order entry station--of the customer's instructions, the film type, and related information pertaining to the treatment of the order. Track F02 of frame 0 is reserved for the recording of historical information regarding the location of frames requiring makeover prints and print reorders by the customer, for use by the photofinisher during a subsequent print reorder by the customer.

Track C0 of each exposed frame (frames 1-25) is reserved for scene-related information for recording by the camera, such as scene luminence, camera orientation and the like. Similarly, track F01 is reserved for photofinisher information unique to a particular exposed frame such as the classification of the negative image (determination of the proper print exposure), number of prints made, etc. Any makeover classification correction is recorded on track F02.

The embodiment of Fig. 5 does not take into account all of the information types which may be magnetically recorded by the camera, retail order station or photofinisher on the film. However, the embodiment of Fig. 5 is an example of the manner in which all information types may be classified as to which track each one is to be assigned. The principle underlying the manner in which each information type is assigned to a particular track is that all information related to a particular transaction should be recorded on the same track, so that that track is dedicated to being written or read during those operations associated with that transaction.

The various transactions provided for in the embodiment of Fig. 5 are: (a) recording of customer data, including the customer address; (b) recording of scene-related information with each exposure, including parameters characterizing lighting conditions and camera exposure settings; (c) recording by the retail order station or photofinisher of customer order information, such as the number of prints desired; (d) the recording of inspection and makeover classification correction for a given frame by the photofinisher; (e) the recording of a summary of makeover data or print reorder data applicable to the entire film roll; (f) the recording of instructions for a film to video player; (g) the recording of instructions for electronic print processing; and (h) the recording of audio. In general (but not always) each of the magnetic recording tracks illustrated in Fig. 1 is dedicated to one of the foregoing transactions (a) through (h). The result is that during recording the amount of searching for an available recording location is minimized while during playback the amount of searching through data irrelevant for a particular operation is also minimized. For example, during the classification operation, in which the optimum print exposure condition for each frame is determined, all scene-related information potentially helpful in determining the proper classification may be obtained by reading data from a single track, namely the camera-dedicated track C0 in each exposed frame (frames 1-25). No other track need be read.

### Preferred Data Architecture

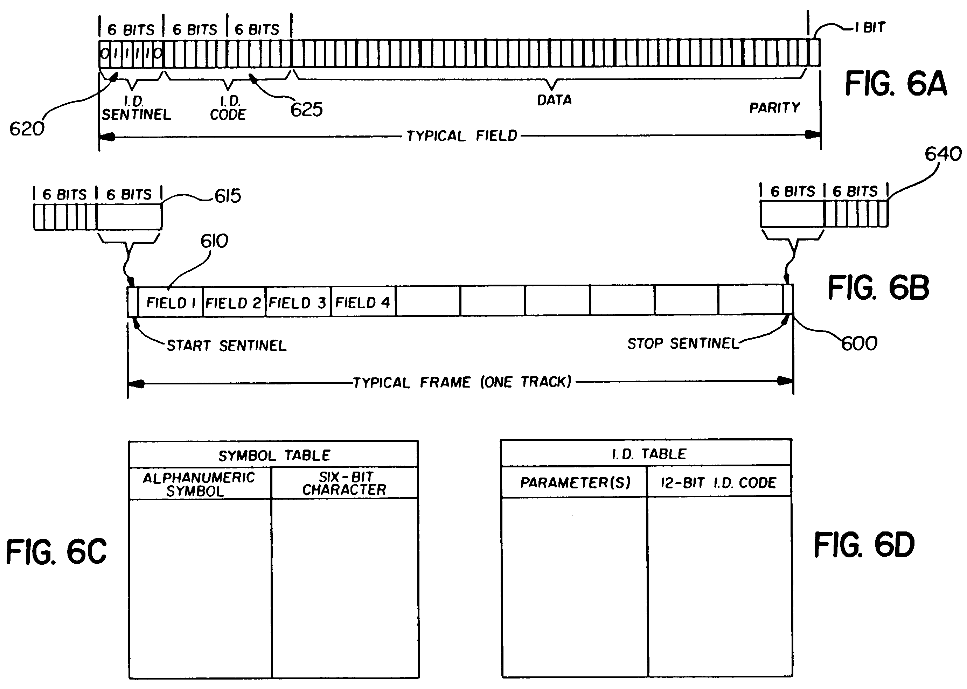

As previously described herein with respect to Fig. 1, the data recorded magnetically on the film strip 100 is divided into frames exposed by the camera (frames 1-25) as well as the film leader (frame 0), the data within each frame being allocated among a plurality of dedicated tracks within the frame. Fig. 6 illustrates the preferred data format within each track of each frame.

In Fig. 6, each track 600 has the length of one frame and is divided into a plurality of fields 610. Each track 600 includes a predicate start sentinel 615 at its starting end (the left-hand end of the track in Fig. 6 where the head begins its scanning of the track 600). Each field includes a predicate ID sentinel 620 followed immediately by an ID code 625. The purpose of the track start sentinel 615 is to notify the read/write system in the camera or in the photofinishing hardware of the beginning location of the track 600. The purpose of the field ID sentinel 620 is to notify the same system of the beginning location of each succeeding field in the track 600. The purpose of the ID code 625 is to identify the type of information recorded in the following field.

The ID code is recorded in the beginning of each field and is determined by the information type which follows it. For example, if the camera 200 of Fig. 2 is about to record the level of scene luminence observed by sensors on the camera during exposure of the frame, the camera first causes a unique ID code to be recorded just ahead of the data representing the scene luminence level. In the simplest embodiment, a unique ID code is assigned to each parameter or information type which may be recorded on the film, so that the ID codes for all possible information types constitute a large dictionary. Inasmuch as the same dictionary must be employed by all stages in the life cycle of the film (e.g., camera, photofinisher, etc.), identical read only memories are provided at each stage, each of these memories embodying a universal ID code dictionary and controlling the reading and writing of ID codes at each stage of film use.

The advantage is that the placement of a particular parameter within the track 600 by the camera need not be previously known by the photofinisher in order for the photofinisher to be able to find that parameter on the track, since the photofinisher may simply refer to the corresponding ID code recorded by the camera. This same advantage holds between any other separate components, where one component writes data onto the film and the other independently reads the data from the film at a later time and, typically, at a different location.

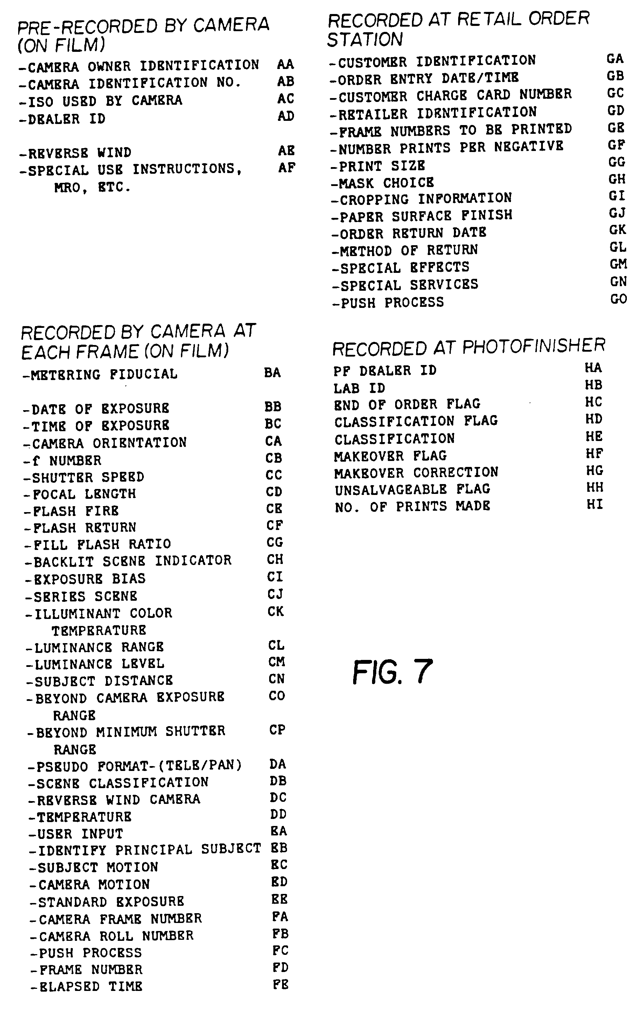

One exemplary embodiment of a universal ID code dictionary is illustrated in Fig. 7. The dictionary of Fig. 7 is implemented as a set of microcodes stored in a read only memory 700 connected to the microprocessor of Fig. 2. The read only memory 700 of Fig. 7 defines a two-character ID code for each parameter which may be recorded. In this embodiment, the ID codes start at AA and end at HI, as just one possible example. While Fig. 7 depicts each ID code as being associated with the name of a particular parameter, in practice each ID code would be associated with the buffer or memory location of that parameter in the recording system so as to identify the corresponding data in terms of its location prior to being recorded. A system designer may use Fig. 7, for example, to construct the actual machine language content of the read only memory 700, depending upon the particular system design employed.

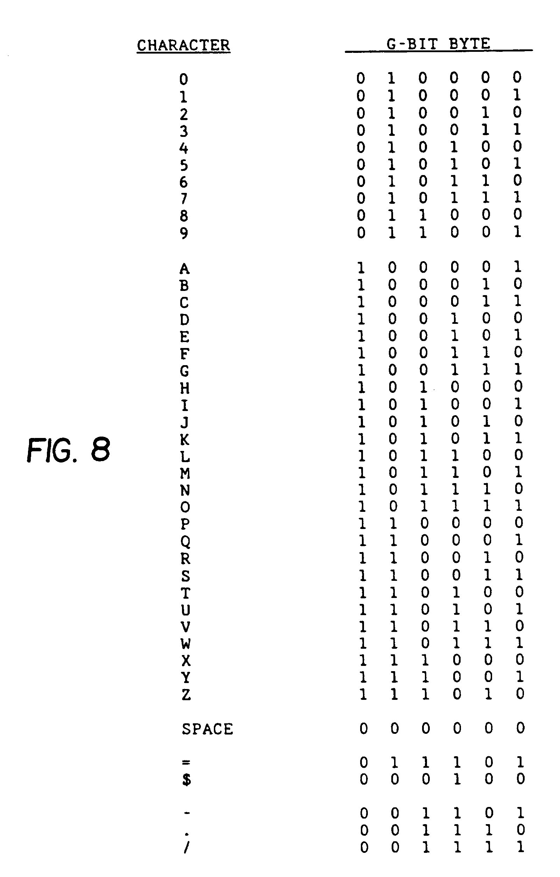

The binary bits recorded for each alphanumeric symbol representing a particular piece of information (e.g. scene luminence or customer address) or for one of the two-character ID codes of Fig. 7 are defined in accordance with the table of Fig. 8. The table of Fig. 8 is represented as a set of microcodes stored in a read only memory 800 connected to the microprocessor of 215. Each alphanumeric symbol is represented by a pattern of six binary bits. The read only memory 800 defines a universal symbol dictionary which is used to perform reading and writing of data on the film at all stages of film use. The table of Fig. 8 is derived from the ASCII standard symbols.

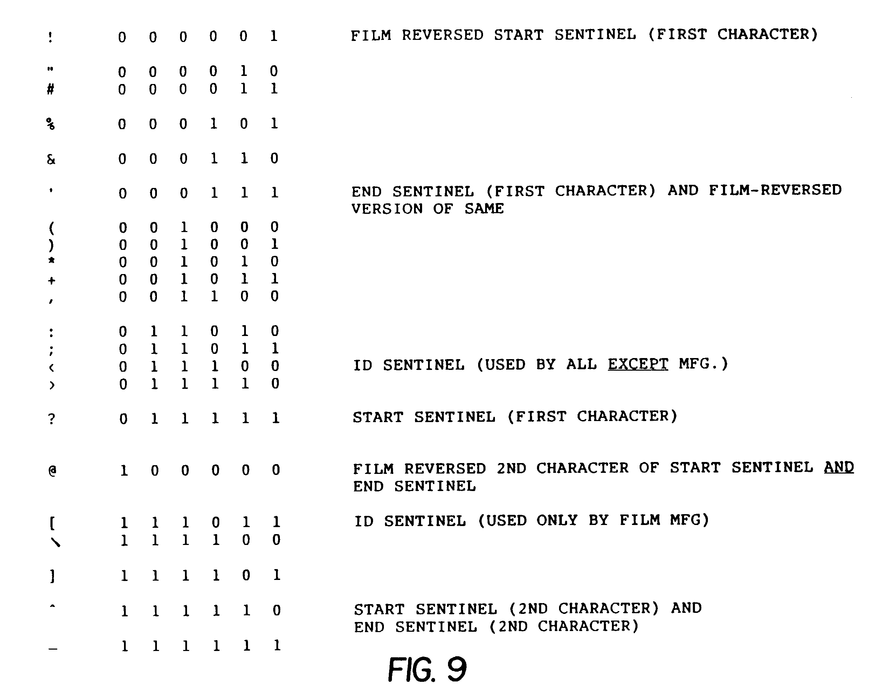

The read only memory 800 also defines the six-bit patterns which are reserved for control purposes and which therefore may not be used for information or data. These reserved symbols are set forth in the exemplary table of Fig. 9, and include the control symbols illustrated in Fig. 6, including the start symbol 615, the ID sentinel 620, a frame stop symbol 640 and the compliments of the start and stop sentinels 615 and 640. Other symbols are reserved in Fig. 9 in order to permit the skilled system designer to exercise other read or write controls as desired.

In Fig. 2, the microprocessor 215 in the camera 200, while referring to the read only memory 240 for the track locations of the various allowed parameters, must also refer to read only memories 700 and 800 for the universal ID code dictionary and universal symbol dictionary in order that subsequent readers of the data recorded by the camera 200 may properly interpret the data.

A six-bit parity character lies at the end of each field, as shown in Fig. 6. The first two (most significant) bits of the parity character are always 10, so that, no matter what, the parity character never assumes the value of any one of the reserved characters of Fig. 9. The middle two bits of the parity character of Fig. 6 are reserved for unforeseen purposes. The last (least significant) two bits of the parity character provide single bit (Hamming) error correction for (a) the ID code at the beginning of the field and (b) the data characters within the field, respectively.

### Exemplary Use of Dedicated Tracks in Photofinishing

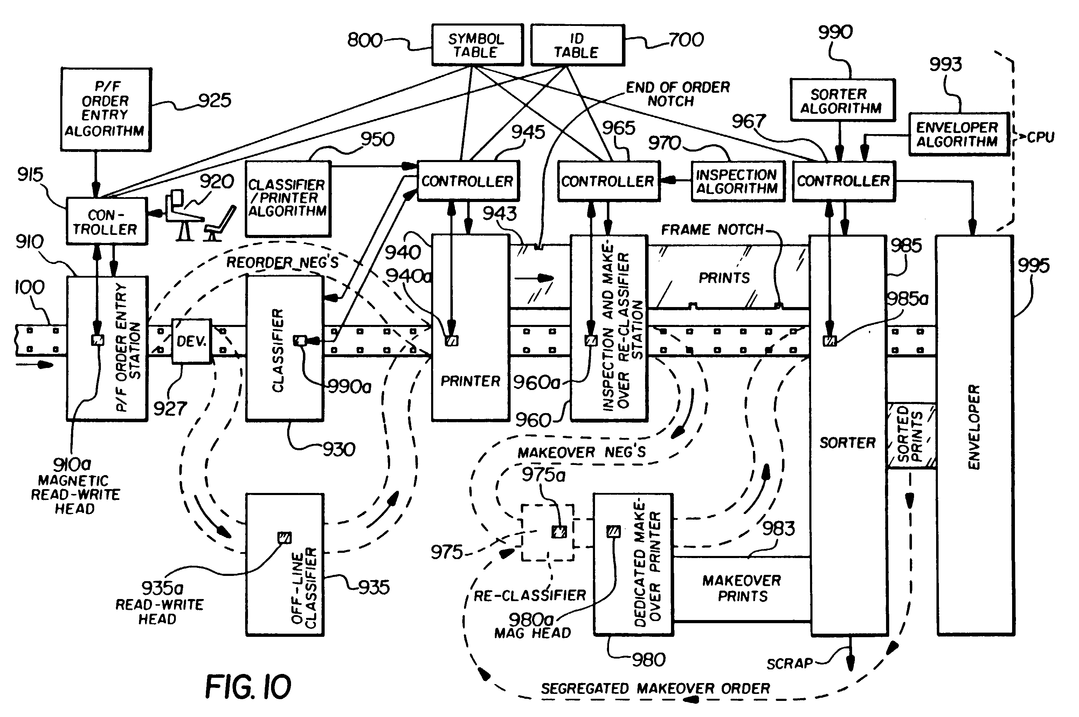

Use of the dedicated film tracks for magnetic recording of information by a camera has been described with reference to the example of Fig. 2. Fig. 10 illustrates one example of the use of the dedicated film tracks (of either Fig. 1 or Fig. 3) for magnetic reading and writing in a photofinishing system. In general, such a photofinishing system employs its own version of the read only memories 240, 700, 800 for track location, an ID code dictionary and a symbol dictionary.

In Fig. 10, the film strip 100 is removed from the cartridge (or at least partially extracted to expose its leader--frame 0) at an order entry station 910. The order entry station 910 may be located either at the dealer or at the photofinishing laboratory. The order entry station has a magnetic read/write system including a head 910a and a controller (microprocessor) 915 which executes an order entry algorithm stored in memory 925. This algorithm defines the correct track locations in frame 0 for the recording of customer-related information, including the number of prints desired, the customer's name and address, etc., entered in at a terminal 920 or read directly from one of the camera tracks. A developer 927 develops the film strip 100 to form a negative image in each exposed frame.

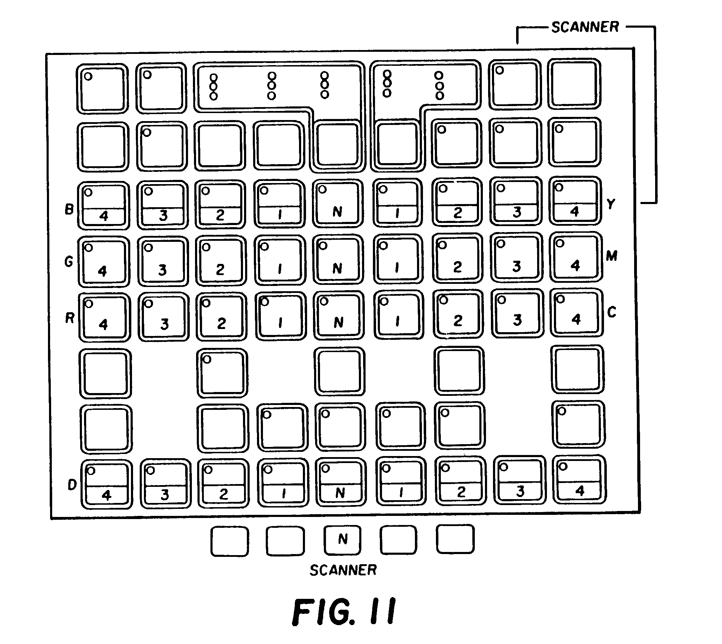

The film strip 100 then enters a classifier 930 which determines the optimum print exposure condition for each frame on the film strip 100. The classifier may do this either manually under control of a human operator or automatically using an image sensor as is done in the Eastman Kodak 3510 Color Printer or in the Eastman Kodak CLAS 35 Color Printer. An exemplary manual control terminal included in the manual version of the classifier 930 is illustrated in Fig. 11. The luminence value at which the photosensitive print paper is to be exposed through a given negative image may be changed from a nominal value (gray level) by arbitrary values -4 to +4 by pressing one of the appropriate buttons in the row of buttons labelled "D" on the left side of the terminal of Fig. 11. The intensity of red, green and blue light at which the print paper is exposed may be altered from pre-defined nominal values in similar manner by arbitrary values -4 to +4 by pushing the appropriate buttons in the corresponding one of the rows of buttons labelled "R", "G" and "B", respectively. The resulting classification (defined by the luminence, red, green and blue print exposure values) is recorded by the classifier's magnetic head 930a in the appropriate one of the dedicated tracks (in accordance with the track allocation defined in a read only memory such as the memory 240 of Fig. 5).

It should be noted that if data previously recorded on the film strip 100 indicates that it has been previously developed and printed (so that a classification value is stored in each frame in the appropriate track), then the developer 927 and the classifier 930 are automatically bypassed.

A printer 940 receives the film strip 100, reads the classification previously recorded in each frame by the classifier 930, and exposes one frame in a roll of photosensitive paper 937 through the corresponding negative frame with an exposure whose characteristics meet the recorded classification. The printer 940 includes its own magnetic read/write system, such as a magnetic head 940a, a controller 945 and a memory 950 storing a classifier/printer algorithm. This algorithm governs the magnetic reading and writing by the printer 940 and classifier 930 in accordance with the dedicated tracks format of Fig 1 or Fig. 3. For example, the printer/classifier algorithm requires the controller 945 to determine whether camera tracks (tracks C0 through C3) were previously recorded on the film strip 100. If so, the dedicated track film format of Fig. 1 applies and scene-related information (if used by the classifier 930 to enhance the accuracy of the classification operation) may be found by reading the appropriate track. Likewise, the printer/classifier algorithm in the memory 950 tells the printer 940 where to find the classification value recorded in each frame by the classifier 930.

An operator at an inspection station views each of the prints on the print roll 943 to determine whether a makeover print is required for any of them. Under control of a controller 965 which executes an inspection algorithm stored in a memory 970, data is recorded on the film strip 100 in the appropriate track by the inspection station's magnetic head 960a reflecting the necessity (if any) of a makeover print in a given frame. Presumably the makeover was necessitated by an incorrect classification, and a correction to the original classification must be computed and recorded in the appropriate track on the film strip 100. In one embodiment, this is done by the inspection station 960 itself, while in another embodiment this is done at a separate re-classifier 975 having its own magnetic recording head 975a and recording system for this purpose. The film strip 100--which may be included in a roll of many such film strips-- is sent to a makeover printer 980, typically by transferring the entire roll. The makeover printer 980 has its own magnetic read/write system, including magnetic head 980a, with which it may read the appropriate data in the appropriate tracks to determine which of the frames require makeover prints and, for each one of these, what the original classification value was and what the classification correction is. From this information, the makeover printer exposes the appropriate frames on the film strip 100 using the corrected classification values.

A roll of makeover prints 983 produced by the makeover printer 980, the roll of prints 943 produced by the printer 940 and the roll of developed film including the film strip 100 are all fed to a sorter 985. The sorter collates the individual original and makeover prints with the corresponding film strips into complete customer orders, discarding any original prints whenever corresponding makeover prints have been made. Whether a corresponding makeover print has been made is determined by the sorter 985 through its magnetic read/write system including a controller 987 which executes a sorter algorithm stored in a memory 990 and the sorter's magnetic head 985a. The head 985a is simply directed to read the required data from the appropriate one of the dedicated tracks on the film strip 100 by the controller 987, in accordance with the track allocation illustrated in Fig. 5.

While the invention has been described in detail by specific reference to preferred embodiments thereof, it is understood that variations and modifications thereof may be made without departing from the scope of the claims.

## Claims

1. Apparatus comprising means (210, 910a) for reading or writing information in a virtually transparent recording layer (120) physically associated with a photographic film strip (100) having successive frames each comprising a plurality of longitudinally extending frame-bounded track locations (C0-C3,F00-F29) in said recording layer (120); **characterized by**
means for selecting (215,240,700,800;915,925) with said means (210, 910a) for reading or writing information being adapted for reading from or writing in a magnetic layer (120) of said recording layer (120) one track location in an individual frame in accordance with a predetermined arrangement in which individual ones of said track locations are dedicated to recording certain different groups of related types of information relevant to individual ones of different transactions associated with photofinishing of said film strip.

2. The apparatus of claim 1 wherein said film strip (100) is of a type used in still photography.

3. The apparatus of claim 1 wherein said individual frame comprises one of an initial frame (0) and a final frame (26) of the film strip, and wherein each of said data categories represents information common to all frames of the film strip.

4. The apparatus of claim 1 wherein said individual frame includes an image area, said data categories represent information specific to said individual frame, and said predetermined different transactions relate to creating and photofinishing an image in the image area of said individual frame.

5. The apparatus of claim 4 wherein said different groups of related data categories comprise at least one of the following: scene related parameters automatically sensed by a camera (200), camera settings; and photofinisher process information.

6. The apparatus of claim 1 wherein said different transactions comprise at least one of the following:
recording of customer identification data;
recording of scene-related information by a camera (200);
recording of print order information; and
recording of inspection and make-over classification correction data.

7. The apparatus of claim 1 wherein said selecting means comprises a read only memory (240,700,800,925) and a processor (215,915).

8. A method for recording data in a virtually transparent magnetic layer (120) physically associated with a photographic film strip (100) having successive image frames, each comprising a plurality of longitudinally extending frame-bounded track locations (C0-C3, F00-F29) in said magnetic layer (120); said method **comprising the steps of**:
dedicating, by means for selecting (215,240,700, 800;915,925), respective ones of said plurality of track locations in said magnetic layer (120) proximate an individual frame to respective different groups of predetermined information categories in accordance with a pre-arrangement, each of said different groups being associated with predetermined different transactions related to photofinishing of said film strip;
storing in a memory (240) instructions which correlate information categories to respective dedicated track locations in accordance with said pre-arrangement;
sorting in compliance with the instructions stored in said memory (240) data to be recorded in said individual frame; and
magnetically recording said sorted data within said dedicated track locations of said individual frame in which in accordance with said pre-arrangement, whereby subsequent access to recorded data relevant to said different transactions is facilitated.

9. The method of claim 8 wherein said different transactions comprise at least one of the following:
recording of customer identification information;
recording of image or camera related information with each exposure by a camera (200) ;
recording of print order information; and
recording of photofinishing process control information for a given frame.

10. The method of claim 9 wherein said transactions are implemented by one or more of the following stages: a still camera (200), a dealer order entry station, a photofinisher order entry station (910), a classifier (930), a printer (940), an inspection station (960), a sorter (985), and an enveloper (995).

## Patentansprüche

1. Vorrichtung mit Mitteln (210, 910a) zum Lesen oder Aufzeichnen von Informationen auf eine faktisch transparente Aufzeichnungsschicht (120), die mit einem fotografischen Filmstreifen (100) verbunden ist, der aufeinanderfolgende Bildfelder aufweist, von denen jedes eine Vielzahl sich in Längsrichtung erstreckender, bildfeldgebundener Spurbereiche (C0 - C3, F00 - F29) in der Aufzeichnungsschicht (120) umfaßt;
**gekennzeichnet** durch Mittel zum Auswählen (215, 240, 700, 800; 915, 925), wobei die Mittel (210, 910a) zum Lesen oder Aufzeichnen von Informationen zum Auslesen aus oder Aufzeichnen auf einer Magnetschicht (120) der Aufzeichnungsschicht (120) geeignet sind, eines Spurbereichs in einem Einzelbildfeld entsprechend einer vorgegebenen Anordnung, in der einzelne Spurbereiche der Aufzeichnung bestimmter anderer Gruppen zusammenhängender Informationsarten bezüglich einzelner unterschiedlicher Transaktionen in Verbindung mit der Laborverarbeitung des Filmstreifens zugeordnet werden.

2. Vorrichtung nach Anspruch 1, dadurch gekennzeichnet, daß der Filmstreifen (100) in der Stehbildfotografie verwendet wird.

3. Vorrichtung nach Anspruch 1, dadurch gekennzeichnet, daß das Einzelbildfeld ein Anfangs- (0) oder Endfeld (26) des Filmstreifens ist, und daß jede der Datenkategorien Informationen darstellt, die allen Bildfeldern des Filmstreifens gemeinsam sind.

4. Vorrichtung nach Anspruch 1, dadurch gekennzeichnet, daß das Einzelbildfeld eine Bildfläche aufweist, daß die Datenkategorien spezielle Informationen über das Einzelbildfeld darstellen, und daß sich die vorgegebenen unterschiedlichen Transaktionen auf die Erzeugung und Laborverarbeitung eines auf der Bildfläche des Einzelbildfeldes befindlichen Bildes beziehen.

5. Vorrichtung nach Anspruch 4, dadurch gekennzeichnet, daß die anderen Gruppen zusammenhängender Datenkategorien mindestens eine der folgenden Komponenten aufweisen: Szenenbezogene Parameter, die automatisch von einer Kamera (200) abgetastet werden; Kameraeinstellungen; und Verarbeitungsinformationen für das Labor.

6. Vorrichtung nach Anspruch 1, dadurch gekennzeichnet, daß die unterschiedlichen Transaktionen mindestens eine der folgenden Komponenten aufweisen:
- Aufzeichnung kundenspezifischer Daten;
- Aufzeichnung szenenbezogener Informationen durch eine Kamera (200);
- Aufzeichnung von Informationen für die Bilderbestellung;
- Aufzeichnung von Klassifikationskorrekturdaten bezügl. Inspektion und Wiederholkopien.

7. Vorrichtung nach Anspruch 1, dadurch gekennzeichnet, daß die Auswählmittel ein ROM (240, 700, 800, 925) und einen Prozessor (215, 915) aufweisen.

8. Verfahren zum Aufzeichnen von Daten auf einer faktisch transparenten Magnetschicht (120), die mit einem fotografischen Filmstreifen (100) verbunden ist, der aufeinanderfolgende Bildfelder aufweist, von denen jedes eine Vielzahl sich in Längsrichtung erstreckender, bildfeldgebundener Spurbereiche (C0 - C3, F00 - F29) in der magnetischen Schicht (120) umfaßt, wobei das Verfahren folgende Schritte aufweist:
- Zuordnen durch Auswählmittel (215, 240, 700, 800; 915, 925) von bestimmten aus der Vielzahl der in der magnetischen Schicht (120) in der Nähe eines Einzelbildfeldes befindlichen Spurbereiche zu bestimmten anderen Gruppen vorgegebener Informationskategorien entsprechend einer vorgegebenen Anordnung, wobei jede der anderen Gruppen vorgegebenen unterschiedlichen Transaktionen in Verbindung mit der Laborverarbeitung des Filmstreifens zugeordnet ist;
- Speichern in einem Speicher (240) von Anweisungen, die Informationskategorien mit bestimmten zugeordneten Spurbereichen entsprechend der vorgegebenen Anordnung korrelieren;
- Sortieren gemäß den im Speicher (240) gespeicherten Anweisungen der Daten, die in dem Einzelbildfeld aufgezeichnet werden sollen; und
- magnetisches Aufzeichnen der sortierten Daten innerhalb der zugeordneten Spurbereiche des Einzelbildfeldes entsprechend der vorgegebenen Anordnung, wodurch der nachfolgende Zugriff auf die aufgezeichneten, den unterschiedlichen Transaktionen entsprechenden Daten erleichtert wird.

9. Verfahren nach Anspruch 8, dadurch gekennzeichnet, daß die unterschiedlichen Transaktionen mindestens aufweisen:
- Aufzeichnung kundenspezifischer Informationen;
- Aufzeichnung bild- oder kamerabezogener Informationen mit jeder Belichtung durch eine Kamera (200);
- Aufzeichnung von Informationen für die Bilderbestellung; und
- Aufzeichnung von Labor-Prozeßsteuerdaten für ein bestimmtes Bildfeld.

10. Verfahren nach Anspruch 9, dadurch gekennzeichnet, daß die Transaktionen durch eine oder mehrere der folgenden Bearbeitungsstationen durchgeführt werden: eine Stehbildkamera (200), eine Auftragseingangsstation beim Händler, eine Auftragseingangsstation (910) im Labor, eine Klassifiziereinrichtung (930), einen Printer (940), eine Prüfstation (960), eine Sortiervorrichtung (985) und eine Verpackungseinrichtung (995).

## Revendications

1. Appareil comprenant des moyens (210, 910a) destiné à lire ou à écrire des informations sur une couche d'enregistrement pratiquement transparente (120), physiquement associée à une bande de film photographique (100) comportant des vues successives comprenant chacune une pluralité d'emplacements de piste (C0 à C3, F00 à F29) s'étendant longitudinalement dans ladite couche d'enregistrement (120), et limités par une vue caractérisé par
des moyens destinés à sélectionner (215, 240, 700, 800 ; 915, 925), lesdits moyens (210, 910a) destinés à lire ou à écrire des informations étant adaptées pour la lecture depuis une couche magnétique (120) de ladite couche d'enregistrement (120) ou pour l'écriture sur celle-ci, un emplacement de piste dans une vue individuelle conformément à un agencement prédéterminé dans lequel des emplacements individuels parmi lesdits emplacements de piste sont réservés à l'enregistrement de certains groupes différents de types d'informations liés se rapportant aux transactions individuelles parmi différentes transactions associées à la photofinition de ladite bande de film.

2. Appareil selon la revendication 1, dans lequel ladite bande de film (100) est d'un type utilisé en photographie.

3. Appareil selon la revendication 1, dans lequel ladite vue individuelle comprend l'une parmi une vue initiale (0) et une vue finale (26) de la bande de film, et dans lequel chacune desdites catégories de données représente des informations communes à toutes les vues sur la bande de film.

4. Appareil selon la revendication 1, dans lequel ladite vue individuelle comprend une zone d'image, lesdites catégories de données représentent des informations particulières à ladite vue individuelle, et dans lequel lesdites transactions différentes prédéterminées se rapportent à la création et à la photofinition d'une image dans la zone d'image de ladite vue individuelle.

5. Appareil selon la revendication 4, dans lequel lesdits groupes différents de catégories de données liées comprennent au moins l'un parmi les suivants : paramètres liés à la scène détectés automatiquement par un appareil de prise de vue (200), réglage de l'appareil de prise de vue, et informations de traitement du photofinisseur.

6. Appareil selon la revendication 1, dans lequel lesdites transactions différentes comprennent au moins l'une parmi les suivantes :
enregistrement des données d'identification du client,
enregistrement des informations liées à la scène par un appareil de prise de vue (200),
enregistrement des informations de la commande de tirage, et
enregistrement des données de correction de classification d'examen et-de retouche.

7. Appareil selon la revendication 1, dans lequel ledit moyen de sélection comprend une mémoire morte (240, 700, 800, 925) et un processeur (215, 915).

8. Procédé destiné à enregistrer des données sur une couche magnétique pratiquement transparente (120) associée physiquement à une bande de film photographique (100) comportant des vues d'image successives, chacune comprenant une pluralité d'emplacements de piste (C0 à C3, F00 à F29) s'étendant longitudinalement sur ladite couche magnétique (120), ledit procédé comprenant les étapes consistant à :
réserver, par des moyens destinés à la sélection (215, 240, 700, 800 ; 915, 925), les emplacements respectifs parmi ladite pluralité d'emplacements de piste sur ladite couche magnétique (120) à proximité d'une vue individuelle, à des groupes différents respectifs de catégories d'informations prédéterminées conformément à un pré-agencement, chacun desdits groupes différents étant associé à des transactions différentes prédéterminées se rapportant à la photofinition de ladite bande de film,
mémoriser dans une mémoire (240), des instructions qui réalisent la corrélation des catégories d'informations avec les emplacements de piste réservés respectifs conformément audit pré-agencement,
trier en accord avec les instructions mémorisées dans ladite mémoire (240), des données qui doivent être enregistrées dans ladite vue individuelle, et
enregistrer magnétiquement lesdites données triées à l'intérieur desdits emplacements de piste réservés de ladite vue individuelle conformément audit pré-agencement, d'où il résulte qu'un accès ultérieur aux données enregistrées se rapportant aux différentes transactions est facilité.

9. Procédé selon la revendication 8, dans lequel lesdites différentes transactions comprennent au moins l'une parmi les suivantes :
enregistrement des informations d'identification de client,
enregistrement des informations se rapportant à l'image ou à l'appareil de prise de vue avec chaque exposition faite par un appareil de prise de vue (200),
enregistrement des informations de commande de tirage, et
enregistrement des informations de commande de traitement de photofinition pour une vue donnée.

10. Procédé selon la revendication 9, dans lequel lesdites transactions sont réalisées par l'un ou plusieurs parmi les stades suivants : un appareil de prise de vue photographique (200), un poste de saisie de commande de revendeur, un poste de saisie de commande de photofinisseur (910), un classificateur (930), une tireuse (940), un poste d'examen (960), une trieuse (985), et un dispositif d'emballage (995).
